(19) Europäisches Patentamt / European Patent Office / Office européen des brevets

(11) **EP 3 899 113 B1**

(12) **EUROPEAN PATENT SPECIFICATION**

(45) Date of publication and mention
of the grant of the patent:
**18.01.2023 Bulletin 2023/03**

(21) Application number: **19817341.1**

(22) Date of filing: **13.12.2019**

(51) International Patent Classification (IPC):
*D01F 2/00* (2006.01)    *D01F 11/02* (2006.01)
*D06M 13/358* (2006.01)    *D06M 23/08* (2006.01)

(52) Cooperative Patent Classification (CPC):
**D01F 2/00; D01F 11/02; D06M 13/358;**
**D06M 23/08;** D06M 2101/06; D06M 2200/35

(86) International application number:
**PCT/EP2019/085141**

(87) International publication number:
**WO 2020/126931 (25.06.2020 Gazette 2020/26)**

(54) **PROCESS FOR THE TREATMENT OF LYOCELL FIBRES**

VERFAHREN ZUR BEHANDLUNG VON LYOCELL-FASERN

PROCÉDÉ POUR LE TRAITEMENT DE FIBRES LYOCELL

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **17.12.2018 EP 18213015**

(43) Date of publication of application:
**27.10.2021 Bulletin 2021/43**

(73) Proprietor: **Lenzing Aktiengesellschaft**
**4860 Lenzing (AT)**

(72) Inventors:
• **AIGNER, Rudolf**
**4863 Seewalchen (AT)**

• **REDLINGER, Sigrid**
**4860 Lenzing (AT)**
• **STEURER, Marianne Mette Hoff**
**4663 Laakirchen (AT)**

(74) Representative: **Nemec, Harald**
**Schwarz & Partner**
**Patentanwälte**
**Wipplingerstrasse 30**
**1010 Wien (AT)**

(56) References cited:
**EP-A1- 0 538 977**    **WO-A1-95/28516**
**WO-A1-99/19555**    **WO-A2-03/038164**
**US-B1- 6 203 746**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a process for the treatment of lyocell fibres as well as to lyocell fibres obtainable by the process of the present invention.

The term "lyocell" is the generic name allocated by BISFA (The International Bureau for the Standardization of man made fibres) for cellulose fibres which are produced by dissolving cellulose in an organic solvent without the formation of a derivative and extruding fibres from said solution by means of a dry-wet spinning process or a melt-blown process. At present, N-methyl-morpholine-N-oxide (NMMO) is used as an organic solvent on a commercial scale.

In said process, the solution of the cellulose is usually extruded by means of a forming tool, whereby it is moulded. Via an air gap, the moulded solution gets into a precipitation bath, where the moulded body is obtained by precipitating the solution. The molded body is washed and optionally dried after further treatment steps. The amine oxide solvent is recycled in a closed loop in the factory. Recovery rates of greater than 99.5% are achieved. Recycling of the additive means that the effect of the process on the environment is very low. It is also essential for the economics of the process.

The process for producing standard Lyocell fibres is well known from, inter alia, U.S. Pat. No. 4,246,221 or WO 93/19230. Lyocell fibres are distinguished by a high tensile strength, a high wet-modulus and a high loop strength. They are used in apparel, home furnishings, workwear and nonwoven-articles. Commercial available fibres are produced e.g. by Lenzing AG and branded TENCEL™ Lyocell.

It is well known that lyocell fibres show a tendency to fibrillate when subjected to mechanical stress in wet state. Fibrillation means that the fibre structure breaks down in longitudinal direction. Because of mechanical abrasion in the wet state, fine fibrills become partially detached from the fibre resulting in a hairy appearance of the fabric. This phenomenon takes place during wet fabric processing steps like dyeing or scouring as well as during laundering. The surface of the fabric gets an unacceptable appearance. The surface of the fabric becomes matted as the fibrils entangle with each other and where fibrillation occurs, the fabric has a lighter color due to spectral reflection from the surface of the fibrils. The fibrillation commonly occurs on the high points of the fabric and lines of whiteness can appear where fibrillation occurs on creases.

Fibrillation of a fabric can occur whenever the fabric is subjected to wet abrasion. This can occur during wet processing of the fabric for example during jet dyeing or washing of garments.

Intensive efforts have been made to reduce the fibrillation of lyocell fibres by treating the fibres with crosslinking agents during fibre manufacture. Appropriate processes are described for example in EP 0 785 304, WO 95/28516 and WO 99/19555. A crosslinking agent is applied to the fibre, preferably to a never-dried fibre. It is then exposed to conditions that cause the agent to react with the cellulose in the fibre causing the cellulose molecules to be attached together more strongly than can occur with the natural hydrogen bonds which normally bind the molecules in the fibre together. Hydrogen bonds can be broken by wetting with water and hence fibrillation can occur. The bonds formed with the crosslinking agent cannot be broken by exposure to water and hence the fibre does not fibrillate. Commercially available crosslinked lyocell fibres are for example LENZING™ Lyocell A100 and LENZING™ Lyocell LF.

Crosslinked fibre should withstand the mechanical and chemical treatments necessary to convert fibre into fabric and the dyeing and finishing processes that are done to the fabric without fibrillation being caused. This means that a crosslinked lyocell fibre should be able to be converted to finished fabric using conventional textile processing and process machinery.

It is highly desirable that the treatment to prevent fibrillation in subsequent processing of dyeing, finishing and laundering, produces a fibre with its dyeability at least being equal to a cotton fibre. It should also have the ability to be processed in dyeing and finishing systems that use either acidic or alkaline media. The cross-linking treatment should be stable during storage without the need for special storage conditions.

The cross-linked lyocell fibre needs to be stable in acidic media if it is to be blended with other fibre types such as wool, polyester and nylon and subsequently dyed. These fibres require acidic conditions for the dyeing systems that are used to colour them. The conditions are typically pH 5 at temperatures up to 130°C.

The crosslinked lyocell fibre needs to be stable in alkaline media if it is to be blended with cotton or other cellulosic fibres. Cellulose fibres are most usually dyed using reactive dyes, as they give bright, deep colours of high fastness. Alkaline conditions may reach up to pH 12-13 at 40-80C.

It is also beneficial if the crosslinking chemicals used do not release formaldehyde during any stage of wet processing.

However, none of the known anti-fibrillation treatments for lyocell fibres are capable of delivering all of the properties or processing requirements listed above in one.

EP 0 538 977 and EP 0 785 304 disclose the use of certain chlortriazine compounds for crosslinking lyocell fibres. These compounds react with cellulose and crosslink cellulose under alkaline conditions. These compounds are commercially available, well-known substances. Further chlorotriazine compounds are proposed to be used as crosslinking agents for lyocell fibre in EP 0 903 434.

One exemplary compound used according to EP 0 538 977, sodium-p-[(4,6-dichloro-1,3,5-triazin-2-yl)amino] benzenesulfonate, in the following called SDTB, is applied to lyocell fibre in the form of a solution, according to EP 0 538 977. This compound has a low solubility in water at room temperature, but dissolves in alkaline media.

In WO 95/28516 it is mentioned that the fibrillation protection created by polyhalogenated polyazine or a compound containing a polyazine ring bearing two or more vinyl sulphone groups or precursors thereof as described in EP 0 538 977 tends to be lost when fabric containing the treated fibre is scoured and laundered. Also the present inventors found that using the procedure described in EP 0 538 977 results in a fibre with insufficient fibrillation protection for textile processing and laundering.

WO 03/038164 mentions that crosslinking agents which are not soluble under alkaline conditions need to be applied to the lyocell fibre in the form of a dispersion which leads to irregular treatment effects.

Further state of the art for the treatment of lyocell fibres with crosslinking agents is known, for example, from EP 0 691 426 A2, WO 2005/073443 and WO 94/09191.

There are several methods for the measurement of fibrillation tendency.

Wet abrasion value (called NSF value):

With this method, the capability of the fibres to withstand abrasion forces in the wet condition is determined. The fibres rotate on a roll and are abraded. The number of revolutions until the fibres are worn through is determined.

Regarding NSF, as a guide 50-150 revolutions would be representative of a fibrillating fibre, whereas a fibre giving 200 or more, especially 400 revolutions or more could be regarded as non-fibrillating and resistant to fibrillation in conventional wet process.

Disintegration test Canadian Standard Freeness (CSF) according to TAPPI standard T227 om-94:

The susceptibility of a fibre to fibrillation in wet state on mechanical working can be measured using the CSF test (Canadian Standard Freeness according to TAPPI standard T227 om-99).

This test was originally developed in the papermaking industry to assess the degree to which a pulp has been refined, which means split into smaller and smaller parts. In the case of man-made fibres, a dilute aqueous slurry of the fibre is subjected to mechanical working under standard conditions and then the drainage property of the dilute suspension of the fibre is measured.

The rate at which the dilute suspension of the fibre is drained, the so called freeness at 20°C, is measured. The freeness of the slurry decreases as the degree of fibrillation increases.

Unfibrillated Lyocell fibre without fibrillation protection gives a starting CSF of about 700 (Lenzinger Berichte, 84 (2005)110-115), but this CSF drops very quickly after only a few minutes of blending. A lyocell fibre with fibrillation protection should show only a small change of the freeness value after blending up to 36 minutes (Lenzinger Berichte, 84 (2005)110-115).

It has been found that a fibre showing a high NSF but a low CSF does not withstand the mechanical stress during wet state processing, i.e. is not resistant against fibrillation during wet processing treatments and on the other hand a fibre having both a high NSF and CSF is protected from breaking down to fibrils under mechanical stress during wet processing.

It is the object of the present invention to provide a lyocell fibre with a stable and permanent fibrillation protection. By "stable" fibrillation protection, a low fibrillation tendency both with regard to NSF and CSF values is meant. By "permanent" fibrillation protection, a fibrillation protection which is not lost during treatment of the fibre either under acid or alkaline conditions, i.e. within a pH-range of 5 to 14, is meant.

This object is achieved by a process for the treatment of lyocell fibres, comprising the step of contacting the fibre with at least one treatment medium, at least one treatment medium containing an amount of a crosslinking agent, wherein the cross-linking agent is capable of crosslinking cellulose under alkaline conditions and has a solubility in water at 20°C of 20 g/l or less, and further comprising the step of treating the fibre with the cross-linking agent under alkaline conditions, characterized in that in the step of contacting the fibre the cross-linking agent is present in the form of a suspension or in solid form.

Preferred embodiments are set out in the dependent claims.

BRIEF DESCRIPTION OF THE DRAWINGS

Figure 1 is a UV-photomicrograph of lyocell fibres after having been contacted with a crosslinking agent according to the present invention.

Figure 2 is a UV-photomicrograph of lyocell fibres after having been contacted with a crosslinking agent according to the state of the art of EP 0 538 977.

DETAILED DESCRIPTION OF THE INVENTION

The present invention employs crosslinking agents which crosslink cellulose under alkaline conditions but are not or only poorly water-soluble at room temperature.

The chemical reaction of a crosslinking agent with cellulose can take place in two steps: In a first step, the crosslinking agents forms a first bond with the fibre with one of its functional groups.

In a second step, the crosslinking agent forms a second bond with the fibre with a further of its functional groups. By way of forming this second bond, the fibres or, respectively, the cellulose molecules within the fibres get bonded to each other, i.e. they are crosslinked.

Depending on the nature of the crosslinking agent, said first bond with the fibre can be formed under mild conditions (such as neutral pH-value), while for forming said second bond more harsh conditions (such as an alkaline pH-value) are necessary.

The present invention employs crosslinking agents which need alkaline conditions at least for forming said second bond with the fibre.

Furthermore, the present invention employs crosslinking agents which are not or only very poorly soluble in water at 20°C, i.e. having a solubility in water at 20°C of 20 g/l or less.

Preferably, on the other hand, the crosslinking agent employed may have a certain small solubility in water at room temperature, such as 5 g/l or more.

A crosslinking agent fulfilling these conditions is p-[(4,6-dichloro-1,3,5-triazin-2-yl)amino]benzenesulfonic acid and/or the sodium salt thereof (SDTB). As mentioned above, according to EP 0 538 977, agents of this kind are applied to lyocell fibre in the form of an alkaline solution at elevated temperature. As also mentioned above, it was found that this way of treatment does not lead to satisfactory results.

In contrast thereto, it has been surprisingly shown that by applying a crosslinking agent as defined above to the lyocell fibre in the form of a suspension or in solid form, instead of being in solution, the object of the present invention can be achieved.

For the purposes of the present invention, a suspension means a mixture of the crosslinking agent with a liquid (such as, especially, water), wherein the crosslinking agent is dissolved to an extent of 50% at most.

Those who are skilled in the art know that impregnation of the fibre with a suspension of particles results in a non-uniform, punctual distribution of the chemical reagent on the surface of the fibre and would expect that this results in inhomogenous fibre properties.

Surprisingly it was found that in the case of the crosslinking agent as defined above, if the crosslinking agent is applied to the fibre in an aqueous suspension, i.e. if the treatment medium containing the crosslinking agent is an aqueous suspension of the same, the fibrillation protection of the Lyocell fibre is permanent and stable.

A preferred embodiment of the present invention is characterized in that contacting the fibre with the treatment medium comprises at least a first and a second contacting step.

Preferably, in the first contacting step a first treatment medium and in the second contacting step a second treatment medium are employed, wherein the compositions of the first treatment medium and the second treatment medium are different.

One of the two treatment media may contain a majority of the total amount of the crosslinking agent employed. Preferably, the first treatment medium contains the majority of the total amound of the crosslinking agent employed.

The concentration of the crosslinking agent in the treatment medium or said first and/or second treatment medium may range of from 5 to 200g/l, especially in the case of SDTB.

The respective concentrations of the crosslinking agent in the first treatment medium and the second treatment medium may differ from each other. Especially, the concentration of the crosslinking agent in the first treatment medium may be higher than the concentration of the crosslinking agent in the second treatment medium.

The second treatment medium may contain no or no significant amount of crosslinking agent.

Preferably, the first treatment medium is an aqueous suspension of the crosslinking agent.

At least one of the first and the second treatment media may be alkaline.

Preferably, only the second treatment medium is alkaline.

The temperature of the contacting step may be from 10°C to 50°C.

The conditions of the step of contacting the fibre with the crosslinking agent, especially the pH-value of the medium and/or the temperature, may be adjusted by the skilled artisan and should be selected such that the crosslinking agent is not dissolved or dissolved only to a small extent in the treatment solution. Thus, the fibre is impregnated with the crosslinking agent predominantly at its surface.

The step of treating the fibre with the crosslinking agent after having contacted the fibre means that the fibre and the crosslinking agent stay in contact for a certain time for the crosslinking reaction to take place. Depending on the conditions of the contacting step, part of the crosslinking reaction such as forming the said first bond with the cellulose fibre may already take place during the contacting step.

In the step of treating the fibre after having contacted the fibre with the crosslinking agent, the conditions may be such that the crosslinking agent is or becomes soluble. The conditions need to be chosen such that the crosslinking agent is capable of forming said second bond with the cellulose fibre.

Especially, the temperature of the step of treating the fibre with the crosslinking agent may be higher than that of the contacting step, preferably 60°C to 120°C, more preferably 80°C to 110°C.

In a preferred embodiment, the step of treating the fibre with the cross-linking agent is performed in the presence of steam.

Especially the step of treating the fibre with the cross-linking agent may be performed in a steam chamber, such as a J-box.

Exposing the fibres to hot conditions, especially to steam during the crosslinking reaction, is known per se.

It needs to be mentioned that the steps of contacting the fibre and treating the fibre need not to take place in different reagent vessel but might also take place in just one vessel, by stepwise changing of the conditions.

The present process can be applied to fibres both in cut form, i.e. staple fibre form and in form of endless filaments, i.e. in the form of a tow.

Preferably, the fibre is present in the form of a tow.

Furthermore, preferably the process is carried out in continuous way.

In a further preferred embodiment, the steps of contacting and treating the fibre are performed with the fibre being in never-dried form. The term "never-dried", as known to the skilled artisan, means that the fibre has not yet undergone a drying step since its formation by being extruded from a spinneret.

The crosslinking agent employed according to the present invention is essentially soluble at a pH-value of 13 or more.

Accordingly, the step of treating the fibre with the crosslinking agent may preferably be carried out at a pH-value of 13 or more.

Preferably, the crosslinking agent is p-[(4,6-dichloro-1,3,5-triazin-2-yl)amino]benzenesulfonic acid and/or a salt thereof, especially the sodium salt thereof (SDTB).

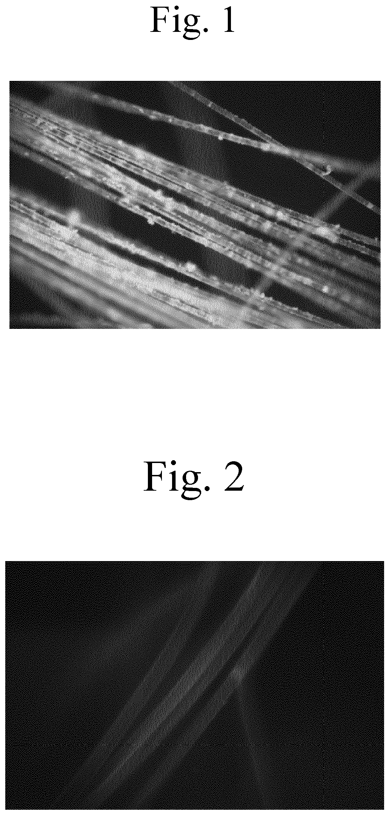

It was found that by using a suspension of SDTB for contacting the fibre, the SDTB particles are located at the surface of the fibre, and do not penetrate into the fibre (see Figure 1). During the step of crosslinking, by heating the impregnated fibre e.g. in a steamer, it is believed that the SDTB becomes soluble, thus forming a uniform crosslinked cellulosic fibre surface film which protects the fibrils from being split off. It was found that the uniform cross-linked surface results in homogenous fibre properties, such as dye uptake.

As mentioned above, it was found that lyocell fibres treated according to the process of the present invention exhibit stable fibrillation properties, i.e. both with regard to wet abrasion value (NSF) and CSF value.

Thus, the object of the present invention is also achieved by a lyocell fibre obtainable by a process according to the present invention, i.e. which is crosslinked with a crosslinking agent as defined above, and which is characterized in that it exhibits a wet abrasion value of 200 revolutions or more and, after having been blended for a time period of 9 minutes, exhibiting a Canadian Standard Freeness value in ml CSF of at least 80% of the Canadian Standard Freeness value in ml CSF of the fibre before having been blended.

Preferably, the lyocell fibre of the present invention exhibits a wet abrasion value of 400 revolutions or more.

The wet abrasion value of the lyocell fibre of the present invention may reach amounts of up to 1000, up to 2000, up to 3000, or even more revolutions.

Furthermore the lyocell fibre according to the present invention preferably exhibits a Canadian Standard Freeness value in ml CSF of at least 80% of the Canadian Standard Freeness value in ml CSF of the fibre before having been blended.

Furthermore, it was found that the fibrillation protection achieved for the lyocell fibre according to the invention resists the conditions of many commonly applied steps of processing textile articles, such as dyeing processses, over a wide range of pH-values.

The lyocell fibre according to the present invention may be present in a titre range of from 0.9 to 3.0 dtex, preferably 1.3 to 1.7 dtex.

The present invention also encompasses the use of the lyocell fibre according to the present invention for the manufacture of textile articles, such as yarns and fabrics.

Furthermore, the present invention also encompasses textile articles, such as yarns and fabrics, containing the lyocell fibre according to the present invention.

Examples:

Test methods:

Wet abrasion value (NSF)

The method described in the publication by Helfried Stover: "Zur Fasernassscheuerung von Viskosefasern" Faserforschung and Textiltechnik 19 (1968) Issue 10, p. 447-452, was employed.

The device employed is an Abrasion Machine Delta 100 of Lenzing Technik Instruments departing from the above-cited publication. The steel shaft is continuously shifted in the longitudinal direction during the measurement in order to prevent the formation of grooves in the filament hose.

Source of supply of the filament hose: Vom Baur GmbH & KG. Marktstraβe 34, D-42369 Wuppertal

Twenty fibres with a length of 38 mm are placed on a metal roll with a thickness of 1 cm and weighed down with a pre-tensing weight. The roll is covered with a viscose filament yarn stocking and is continuously moistened. The roll is turned at a speed of 500 rotations per minute during measuring, and at the same time it is turned diagonal to the fibre axis backwards and forwards whereby a pendulum movement of approximately 1 cm takes place.

The number of revolutions until the fibres are worn through and the pre-load weight triggers a contact is determined.

Test Conditions:

Water flow rate: 8.2 ml/min
Speed of rotation: 500 U/min
Abrasion angle: 40°
Pre-load weight: 50 mg

The mean value of the abrasion cycles of 20 fibres is taken as the measured value. The higher the number of revolutions until the fibres are worn through, the less fibrillation of the fibres takes place.

Canadian Standard Freeness Test (CSF)

To test the fibrillation of lyocell fibres the fibre is cut to 5 mm lengths and 3,3 g air-dry fibre are put into 1000ml tap water in a graduated cylinder, the top of the cylinder is closed and the cylinder is gently inverted 180° three times.

This fibre suspension is transferred to the Canadian Standard of freeness testing equipment according to TAPPI T227 om-99 (manufactured by Lorentzen & Wetters, Sweden). The temperature and the CSF value are measured. The weight of the sample is determined after 4 hours drying in an oven at 105°C. Corrections of the measured CSF results are performed to take account of the concentration and temperature of the fibre slurry. The corrections are based on the following equations:

$$\text{Concentration correction} = (X - 0.3) \times 590 \times (1+(((0.4 - X) / 0.2) \times (C / 1000))) \times (1-((C-390)^2 / ((C^{0.2}) \times 87000)))$$

$$\text{Temperature correction} = (20 - T) \times 4.6 \times (1 - (((400 - C)^2)/(( C^{0.25} ) \times 61000)))$$

Where

X = concentration of the fibre slurry
T = temperature of the fibre slurry
C = measured CSF

The two resulting correction values are then added to or subtracted, respectively, from the measured CSF in any order.

This gives a CSF value for an unfibrillated fibre sample in the wet state, not yet having been mechanically stressed . As mentioned above, unfibrillated Lyocell fibre without fibrillation protection gives a starting CSF of about 700 (Lenzinger Berichte, 84 (2005)110-115).

For disintegrating the fibre, a blender with a one liter stainless steel container with two-piece lid (Waring blender 8011EB model 38BL41) filled with fibre suspension of 3,3 g lutro fibre in 500 ml tap water is run with a speed of 18000 RPM for a certain period of time during which fibrillation may occur. The longer the blender is run the more likely it is that the fibre will fibrillate. After blending the fibre slurry is transferred to a graduated cylinder, diluted with tap water to give 1000 ml suspension and the cylinder is gently inverted 180° three times and the CSF measured and the value corrected as described above.

The blender unit/equipment has to be calibrated in regard to its severity of blending.

To this end, a reference sample of standard lyocell fibre (1,3 dtex /38mm cutting length, tenacity conditioned 36 cN/tex, elongation conditioned 13%, bright, showing a starting CSF of 700 ml), such as LENZING™ Lyocell, is employed.

The fibres are blended for 4 minutes and 6 minutes, respectively, and the CSF value is determined The CSF value after blending for 4 minutes should be below 200 ml, and the CSF value after blending for 6 minutes should be below 100 ml.

If these thresholds are not met, the blending intensity of the device employed is adapted until these values are reached.

Fibre preparation method 1:

An aqueous solution of cellulose and NMMO was extruded into an aqueous coagulation bath to form 1.3dtex filaments of Lyocell. After washing with water to remove all excess NMMO, the Lyocell filaments were pressed to a moisture content of 125% and cut into 20cm long hanks of fibres.

Fibre preparation method 2:

An aqueous solution of cellulose and NMMO was extruded into an aqueous coagulation bath to form 1.3dtex filaments of Lyocell. The filaments were washed with water to remove all excess NMMO, pressed to a moisture content of 150-200% and then treated further.

Example 1:

A filament of lyocell was produced according to fibre preparation method 2 and then passed into the first impregnation bath into which 8.3w-% of SDTB on cellulose was dosed into an aqueous circulation system at a temperature of 50°C to give a concentration of 40g/l of an aqueous, paste-like suspension. The filaments were pressed to a moisture content of 110-140% and then passed through a second impregnation bath at 10°C into which 1.34w-% of NaOH and 1.1w-% of $Na_2CO_3$ on cellulose was dosed into an aqueous circulation system. The filaments were then pressed to a moisture content of 160-190%, heated to 100°C in a steaming chamber for 9 minutes and then washed thoroughly by adding acidic water (pH 3.5) and then by water until they were free of excess chemicals and dried.

Example 2:

A filament of lyocell was produced according to fibre preparation method 2 and then passed into the first impregnation bath into which 8.3w-% of SDTB on cellulose was dosed into an aqueous circulation system at a temperature of 35°C to give a concentration of 40g/l of an aqueous paste-like suspension. The filaments were pressed to a moisture content of 180-210% and then passed through a second impregnation bath at 10°C into which 1.34w-% of NaOH and 1.1w-% of $Na_2CO_3$ on cellulose was dosed into an aqueous circulation system. The filaments were then pressed to a moisture content of 170-200%, heated to 100°C in a steaming chamber for 8.5 minutes and then washed thoroughly by adding acidic water (pH 3.5) and then by water until they were free of excess chemicals and dried.

Example 3: Reference example according to EP 0 538 977, example 4f

A filament of lyocell was produced according to fibre preparation method 1. A hank of 30g never-dried lyocell fibres was impregnated for 30 seconds at 70°C in 600g of an aqueous bath made up by combining a 70°C warm solution of Thiotan R, a 70°C solution of $Na_2CO_3$ and a 70°C solution of Na2SO4 (final concentrations: 50g/l Thiotan R (= 13g/l SDTB) , 20g/l $Na_2CO_3$, 100g/l $Na_2SO_4$). The fibres were pressed at 3bar on a Foulard and heated to 102°C in a steam chamber for 20 minutes. The filaments were washed neutral with 600g of an aqueous acetic acid solution with a concentration of 1g/l. The fibres were dried at 60°C over night.

Reference example Example 4:

A filament of lyocell was produced according to fibre preparation method 2 and then directly passed into an impregnation bath into which 9.5w-% of SDTB, 2.7w-% of NaOH and 1.1w-% of $Na_2CO_3$ on cellulose were dosed into an aqueous circulation system at a temperature of 10°C to give a concentration of 92g/l of SDTB. The SDTB was dissolved to an extent of more than 50% in the bath. The filaments were then pressed to a moisture content of 150-170%, heated to 100°C for 8.5 minutes using a steam chamber and then the filaments were washed by adding acidic water (pH 3.5) and then by water until they were free of excess chemicals and dried.

Example 5:

A filament of lyocell was produced according to fibre preparation method 2 and then passed into the first impregnation bath into which 8.1w-% of SDTB and 0.35w-% of NaOH on cellulose was dosed into an aqueous circulation system at a temperature of 50°C to give a concentration of 58g/l of an aqueous paste-like suspension. The filaments were pressed to a moisture content of 160-190% and then passed through a second impregnation bath at 10°C into which 1.2w-% of NaOH and 1.1w-% of $Na_2CO_3$ on cellulose was dosed into an aqueous circulation system. The filament was then pressed to a moisture content of 160-190%, heated to 100°C in a steaming chamber for 8.5 minutes and then washed thoroughly by adding acidic water (pH 3.5) and then by water until they were free of excess chemicals and dried.

The fibres were analyzed in terms of their wet abrasion value (NSF) and CSF-value. The results are compared in the following table:

| Example No. | NSF [U] | CV [%] | CSF mL after x minutes blending | | | | | |
|---|---|---|---|---|---|---|---|---|
| | | | 0 min | 9 min | 18 min | 27 min | 36 min | 45 min |
| | | | | | | | | |
| 1 | 943 | 48 | 678 | 633 | 607 | 574 | 542 | 512 |
| 2 | 819 | 64 | 677 | 627 | 575 | 531 | 477 | 455 |
| 3 | 597 | 85 | 716 | 152 | | | | |
| 4 | 502 | 86 | 702 | 39 | | | | |
| 5 | 285 | 41 | 691 | 599 | 354 | 175 | 97 | |

Example 3 is an example according to the state of the art known from EP 0 538 977. It can be seen that while the wet abrasion value of these fibres seems to be sufficient, the CSF value drops down significantly after 9 minutes of blending.

In example 4, due to the conditions employed in the contacting step, more than 50% part of the SDTB was dissolved. Again, a significant decrease in the CSF value is observed.

Examples 1, 2 and 5 are examples according to the present invention. All examples show satisfying wet abrasion values, but, in addition, also show still very high CSF values after blending, i.e. more than 85% of the original value after 9 minutes of blending.

Resistance of fibrillation property against fabric processing steps

Fibres according to the invention were processed into knitted fabrics.

The knitted fabrics were subjected to various wet processing treatments common for fabrics, including both acidic and alkaline environments. It was found by optical assessment that the surface of the knitted fabrics stayed clean without showing a hairy appearance caused by fibrillation or pills of entangled fibrils, and, as determined by wet abrasion values, that the fibrillation property stayed conserved at least to a certain extent after having been subjected to various conditions, such as reactive (alkaline) dyeing as well as dyeing under conditions suitable for polyester dyeing (acid dyeing).

Single jersey fabric having a basic weight of about 130 gsm were produced using a ring yarn Nm 50/1 alpha 105 out of fibres according to the invention.

Before dyeing, the fabric samples were washed for 20 minutes at 80°C in a 5 liter beaker using the Labomat Type BFA-12 produced by Mathis, Switzerland, liquor ratio 1:30, rotation 20 rpm.

The following washing solution was prepared: 1 g/l detergent for textile finishing e.g. Kieralon JET trademark of BASF, 1 g/l sodium carbonate, 1 g/l wetting agent like Albaflow FFA by Huntsman and 1 g/1 lubricant e.g. Persoftal L Tanatex Chemicals. After washing the fabrics were rinsed warm and cold.

The dyeing of the fabrics was also carried out in the Labomat Type BFA-12 in a 5 liter beaker, liquor ratio 1:30, rotation 20 rpm.

**Example 1 warm reactive dyeing (alkaline)**

Composition of dye bath using softened water:

4,0 % Novacron marineblau FG trademark by Huntsman
40 g/l Sodium sulphate (Salt)
6 g/l Sodium carbonate
1 g/l Lubricant
1 g/l Antifoam

The fabric and the dye bath were heated up in the labomat to 60°C at a heating rate of 6°C per minute. When the dye bath had reached 60°C the dye stuff, lubricant and antifoam were added. After 25 minutes the salt was added and five minutes later Sodium carbonate was added. After 15 minutes at 60°C the bath was drained and the fabric was rinsed in 20°C water for 10 mins then drained. The fabric was then treated with 1ml/l acetic acid (60%) at 40°C for 10 mins. The water was then drained and the fabric was then rinsed with 40°C water for 10 mins. This bath was drained and then the soapening followed which means the fabric was treated at 90 °C with a detergent solution (1 g/l Kieralon JET in softened water). The bath was drained and the fabric was rinsed one final time with 20°C tap water for 10 mins then drained. The fabrics were then hung on a needle frame and allowed to dry at room temperature.

After this procedure the surface of the blue fabric stayed completely clean showing no fibrillation. Fibers taken out of the dyed fabric showed no loss of the NSF value compared to the NSF value of the original fiber before dyeing.

The washing performance of the dyed fabric was tested by doing 10 household washings at 40°C in a household washing machine using mild detergent. After each washing step the fabric was tumble dried. After this procedure the visual inspection showed that the surface of the fabric was still good, showing no pills or greying and only little negligible fiber splice.

**Example 2 high temperature acid dyeing ("polyester dyeing")**

Composition of dye bath using softened water:

1,0 % Dianix blue FBL trademark DyStar
1 g/l Sodium acetate
1 g/l lubricant
1 g/l anionic crease prevention agent
Adjustment of dye bath pH to 4,5 with acetic acid.

The dye bath with the fabric was heated up to 130°C at a heating rate of 2°C per minute and held at 130°C for 60 minutes. After cooling down to 70°C at 2°C per minute, warm and cold rinsing was done followed by reductive cleaning.

Composition of reductive cleaning bath:

2 g/l sodiumhydrosulfite
2 ml/l 34% percent caustic soda solution
1 g/l lubricant

The fabric and the cleaning bath with a liquor ratio 1:30 were heated at 6°C/ minute to 80°C in the labomat at 20 rpm. After 20 minutes at 80°C the bath was drained and the fabric was rinsed in 20°C water for 10 mins then drained. The fabric was then treated with 1ml/l acetic acid (60%) at 40°C for 10 mins. The water was then drained and the fabric was then rinsed with 40°C water for 10 mins. This bath was drained and the fabric was rinsed a final time with 20°C water for 10 mins then drained. The fabrics were then hung on a needle frame and allowed to dry at room temperature.

After this procedure the surface of the light blue fabric stayed completely clean showing no fibrillation. Fibers taken out of the dyed fabric showed no loss of the NSF value compared to the NSF value of the original fiber before dyeing.

The washing performance of the dyed fabric was tested by doing 10 household washings at 40°C in a household washing machine using mild detergent. After each washing step the fabric was tumble dried. After this procedure the surface of the fabric was no different to dyed fabric before washing by visual inspection. The acid dyeing conditions do not negatively affect the washing performance of the fabric.

**Claims**

1. Process for the treatment of lyocell fibres, comprising the step of contacting the fibre with at least one treatment medium, at least one treatment medium containing an amount of a crosslinking agent, wherein the cross-linking agent is capable of crosslinking cellulose under alkaline conditions and has a solubility in water at 20°C of 20 g/l or less, and further comprising the step of treating the fibre with the cross-linking agent under alkaline conditions, **characterized in that** in the step of contacting the fibre the cross-linking agent is present in the form of a suspension or in solid form.

2. Process according to claim 1, **characterized in that** contacting the fibre with the treatment medium comprises at least a first and a second contacting step.

3. Process according to claim 2, **characterized in that** in the first contacting step a first treatment medium and in the second contacting step a second treatment medium are employed, wherein the compositions of the first treatment medium and the second treatment medium are different.

4. Process according to claim 2 or 3, **characterized in that** the first treatment medium contains a majority of the total amount of the crosslinking agent employed.

5. Process according to claim 3 or 4, **characterized in that** the first treatment medium is an aqueous suspension of the crosslinking agent.

6. Process according to one or more of claims 3 to 5, **characterized in that** at least one of the first and the second treatment media is alkaline.

7. Process according to claim 6, **characterized in that** only the second treatment medium is alkaline.

8. Process according to any of the preceding claims, **characterized in that** the temperature of the contacting step is from 10°C to 50°C.

9. Process according to any of the preceding claims, **characterized in that** the temperature of the step of treating the fibre with the crosslinking agent is higher than that of the contacting step, preferably 60°C to 120°C, more preferably 80°C to 110°C.

10. Process according to any of the preceding claims, **characterized in that** the step of treating the fibre with the cross-linking agent is performed in the presence of steam.

11. Process according to claim 10, **characterized in that** the step of treating the fibre with the cross-linking agent is performed in a steam chamber.

12. Process according to any of the preceding claims, **characterized in that** the fibre is present in the form of a tow.

13. Process according to any of the preceding claims, **characterized in that** the process is carried out in a continuous way.

14. Process according to any of the preceding claims, **characterized in that** the steps of contacting and treating the fibre are performed with the fibre being in never-dried form.

15. Process according to any of the preceding claims, **characterized in that** the crosslinking agent is essentially soluble at a pH-value of 13 or more.

16. Process according to any of the preceding claims, **characterized in that** the crosslinking agent is p-[(4,6-dichloro-1,3,5-triazin-2-yl)amino]benzenesulfonic acid and/or a salt thereof.

17. Lyocell fibre obtainable by a process according to any of the preceding claims, **characterized in that** it exhibits a wet abrasion value of 200 revolutions or more and, after having been blended for a time period of 9 minutes, exhibiting a Canadian Standard Freeness value in ml CSF of at least 80% of the Canadian Standard Freeness value in ml CSF of the fibre before having been blended.

18. Lyocell fibre according to claim 17, **characterized in that** it exhibits a wet abrasion value of 400 revolutions or more.

19. Lyocell fibre according to claim 17 or 18, **characterized in that** it exhibits a Canadian Standard Freeness value in ml CSF of at least 85% of the Canadian Standard Freeness value in ml CSF of the fibre before having been blended.

20. Lyocell fibre according to any one of claims 17 to 19, **characterized in that** it is crosslinked with p-[(4,6-dichloro-1,3,5-triazin-2-yl)amino]benzenesulfonic acid and/or a salt thereof.

**Patentansprüche**

1. Verfahren zur Behandlung von Lyocellfasern, umfassend den Schritt des In-Kontakt-Bringens der Faser mit mindestens einem Behandlungsmedium, wobei mindestens ein Behandlungsmedium eine Menge eines Vernetzungsmittels enthält, und wobei das Vernetzungsmittel in der Lage ist, Cellulose unter alkalischen Bedingungen zu vernetzen, und eine Löslichkeit in Wasser bei 20°C von 20 g/1 oder weniger aufweist, und ferner umfassend den Schritt des Behandelns der Faser mit dem Vernetzungsmittel unter alkalischen Bedingungen, **dadurch gekennzeichnet, dass** das Vernetzungsmittel im Schritt des In-Kontakt-Bringens mit der Faser in Form einer Suspension oder in fester Form vorliegt.

2. Verfahren nach Anspruch 1, **dadurch gekennzeichnet, dass** das In-Kontakt-Bringen der Faser mit dem Behandlungsmedium mindestens einen ersten und einen zweiten Kontaktierungsschritt umfasst.

3. Verfahren nach Anspruch 2, **dadurch gekennzeichnet, dass** in dem ersten Kontaktierungsschritt ein erstes Behandlungsmedium und in dem zweiten Kontaktierungsschritt ein zweites Behandlungsmedium verwendet wird, wobei die Zusammensetzungen des ersten Behandlungsmediums und des zweiten Behandlungsmediums unterschiedlich sind.

4. Verfahren nach Anspruch 2 oder 3, **dadurch gekennzeichnet, dass** das erste Behandlungsmedium einen Großteil der Gesamtmenge des eingesetzten Vernetzungsmittels enthält.

5. Verfahren nach Anspruch 3 oder 4, **dadurch gekennzeichnet, dass** das erste Behandlungsmedium eine wässrige Suspension des Vernetzungsmittels ist.

6. Verfahren nach einem oder mehreren der Ansprüche 3 bis 5, **dadurch gekennzeichnet, dass** mindestens eines der ersten und zweiten Behandlungsmedien alkalisch ist.

7. Verfahren nach Anspruch 6, **dadurch gekennzeichnet, dass** nur das zweite Behandlungsmedium alkalisch ist.

8. Verfahren nach einem der vorhergehenden Ansprüche, **dadurch gekennzeichnet, dass** die Temperatur beim Schritt des In-Kontakt-Bringens zwischen 10°C und 50°C liegt.

9. Verfahren nach einem der vorhergehenden Ansprüche, **dadurch gekennzeichnet, dass** die Temperatur beim Schritt der Behandlung der Faser mit dem Vernetzungsmittel höher ist als die Temperatur beim Schritt des In-Kontakt-Bringens, vorzugsweise 60°C bis 120°C, noch bevorzugter 80°C bis 110°C.

10. Verfahren nach einem der vorhergehenden Ansprüche, **dadurch gekennzeichnet, dass** der Schritt der Behandlung der Faser mit dem Vernetzungsmittel in Gegenwart von Dampf durchgeführt wird.

11. Verfahren nach Anspruch 10, **dadurch gekennzeichnet, dass** der Schritt der Behandlung der Faser mit dem Vernetzungsmittel in einer Dampfkammer durchgeführt wird.

12. Verfahren nach einem der vorhergehenden Ansprüche, **dadurch gekennzeichnet, dass** die Faser in Form eines Spinnkabels vorliegt.

13. Verfahren nach einem der vorhergehenden Ansprüche, **dadurch gekennzeichnet, dass** das Verfahren kontinuierlich durchgeführt wird.

14. Verfahren nach einem der vorhergehenden Ansprüche, **dadurch gekennzeichnet, dass** die Schritte des In-Kontakt-Bringens und Behandelns der Faser durchgeführt werden, während die Faser in niemals getrockneter Form vorliegt.

15. Verfahren nach einem der vorhergehenden Ansprüche, **dadurch gekennzeichnet, dass** das Vernetzungsmittel bei einem pH-Wert von 13 oder mehr im Wesentlichen löslich ist.

16. Verfahren nach einem der vorhergehenden Ansprüche, **dadurch gekennzeichnet, dass** das Vernetzungsmittel p-[(4,6-Dichlor-1,3,5-triazin-2-yl)amino]benzolsulfonsäure und/oder ein Salz davon ist.

17. Lyocellfaser, erhältlich durch ein Verfahren nach einem der vorhergehenden Ansprüche, **dadurch gekennzeichnet, dass** sie einen Nassabriebwert von 200 Umdrehungen oder mehr aufweist und nach einer Mischdauer von 9 Minuten einen Canadian Standard Freeness-Wert in ml (CSF) von mindestens 80% des Canadian Standard Freeness-Wertes in ml (CSF) der Faser vor dem Mischen aufweist.

18. Lyocellfaser nach Anspruch 17, **dadurch gekennzeichnet, dass** sie einen Nassabriebwert von 400 Umdrehungen oder mehr aufweist.

19. Lyocellfaser nach Anspruch 17 oder 18, **dadurch gekennzeichnet, dass** sie einen Canadian Standard Freeness-Wert in ml (CSF) von mindestens 85% des Canadian Standard Freeness-Wertes in ml (CSF) der Faser vor dem Mischen aufweist.

20. Lyocellfaser nach einem der Ansprüche 17 bis 19, **dadurch gekennzeichnet, dass** sie mit p-[(4,6-Dichlor-1,3,5-triazin-2-yl)amino]benzolsulfonsäure und/oder einem Salz davon vernetzt ist.

**Revendications**

1. Procédé pour le traitement de fibres lyocell, comprenant l'étape consistant à mettre en contact la fibre avec au moins un milieu de traitement, au moins un milieu de traitement contenant une quantité d'un agent de réticulation, dans lequel l'agent de réticulation est capable de réticuler la cellulose dans des conditions alcalines et présente une solubilité dans l'eau à 20°C de 20 g/l ou moins, et comprenant en outre l'étape de traitement de la fibre avec l'agent de réticulation dans des conditions alcalines, **caractérisé en ce que** dans l'étape de mise en contact de la fibre, l'agent de réticulation est présent sous la forme d'une suspension ou sous forme solide.

2. Procédé selon la revendication 1, **caractérisé en ce que** la mise en contact de la fibre avec le milieu de traitement comprend au moins une première et une seconde étape de mise en contact.

3. Procédé selon la revendication 2, **caractérisé en ce que** dans la première étape de mise en contact, un premier milieu de traitement est utilisé, et dans la seconde étape de mise en contact, un second milieu de traitement est utilisé, dans lequel les compositions du premier milieu de traitement et du second milieu de traitement sont différentes.

4. Procédé selon la revendication 2 ou 3, **caractérisé en ce que** le premier milieu de traitement contient une majorité de la quantité totale de l'agent de réticulation utilisé.

5. Procédé selon la revendication 3 ou 4, **caractérisé en ce que** le premier milieu de traitement est une suspension aqueuse de l'agent de réticulation.

6. Procédé selon une ou plusieurs des revendications 3 à 5, **caractérisé en ce qu'**au moins l'un des premier et second milieux de traitement est alcalin.

7. Procédé selon la revendication 6, **caractérisé en ce que** seul le second milieu de traitement est alcalin.

8. Procédé selon l'une quelconque des revendications précédentes, **caractérisé en ce que** la température de l'étape de mise en contact est de 10°C à 50°C.

9. Procédé selon l'une quelconque des revendications précédentes, **caractérisé en ce que** la température de l'étape de traitement de la fibre avec l'agent de réticulation est supérieure à celle de l'étape de mise en contact, de préférence de 60°C à 120°C, de manière encore plus préférée de 80°C à 110°C.

**10.** Procédé selon l'une quelconque des revendications précédentes, **caractérisé en ce que** l'étape de traitement de la fibre avec l'agent de réticulation est réalisée en présence de vapeur d'eau.

**11.** Procédé selon la revendication 10, **caractérisé en ce que** l'étape de traitement de la fibre avec l'agent de réticulation est effectuée dans une chambre de vapeur d'eau.

**12.** Procédé selon l'une quelconque des revendications précédentes, **caractérisé en ce que** la fibre est présente sous la forme d'un câble.

**13.** Procédé selon l'une quelconque des revendications précédentes, **caractérisé en ce que** le procédé est réalisé de manière continue.

**14.** Procédé selon l'une quelconque des revendications précédentes, **caractérisé en ce que** les étapes de mise en contact et de traitement de la fibre sont effectuées avec la fibre sous une forme jamais séchée.

**15.** Procédé selon l'une quelconque des revendications précédentes, **caractérisé en ce que** l'agent de réticulation est essentiellement soluble à une valeur de pH de 13 ou plus.

**16.** Procédé selon l'une quelconque des revendications précédentes, **caractérisé en ce que** l'agent de réticulation est l'acide p-[(4,6-dichloro-1,3,5-triazin-2-yl)amino]benzènesulfonique et/ou un sel de celui-ci.

**17.** Fibre lyocell pouvant être obtenue par un procédé selon l'une quelconque des revendications précédentes, **caractérisée en ce qu'**elle présente une valeur d'abrasion humide de 200 tours ou plus et, après avoir été mélangée pendant une période de temps de 9 minutes, présente une valeur d'indice d'égouttage Canadien standard, CSF, en ml d'au moins 80 % de la valeur d'indice d'égouttage Canadien standard, CSF, de la fibre avant mélange.

**18.** Fibre lyocell selon la revendication 17, **caractérisée en ce qu'**elle présente une valeur d'abrasion humide de 400 tours ou plus.

**19.** Fibre lyocell selon la revendication 17 ou 18, **caractérisée en ce qu'**elle présente une valeur d'indice d'égouttage Canadien standard, CSF, en ml d'au moins 85 % de la valeur d'indice d'égouttage Canadien standard, CSF, de la fibre avant mélange.

**20.** Fibre lyocell selon l'une quelconque des revendications 17 à 19, **caractérisée en ce qu'**elle est réticulée avec de l'acide p-[(4,6-dichloro-1,3,5-triazin-2-yl)amino]benzènesulfonique et/ou un sel de celui-ci.

Fig. 1

Fig. 2

## REFERENCES CITED IN THE DESCRIPTION

**Patent documents cited in the description**

- US 4246221 A
- WO 9319230 A
- EP 0785304 A
- WO 9528516 A
- WO 9919555 A
- EP 0538977 A
- EP 0903434 A
- WO 03038164 A
- EP 0691426 A2
- WO 2005073443 A
- WO 9409191 A

**Non-patent literature cited in the description**

- *Lenzinger Berichte,* 2005, vol. 84, 110-115
- **HELFRIED STOVER.** Zur Fasernassscheuerung von Viskosefasern. *Faserforschung and Textiltechnik,* 1968, vol. 19 (10), 447-452